# EUROPEAN PATENT APPLICATION

(11) **EP 2 549 381 A2**
(43) Date of publication of application: **23.01.2013**
(21) Application number: 12166213.4
(22) Date of filing: 30.04.2012
(51) Int. Cl.: G06F 9/50, G06F 11/30

(54) **Control computer and data accessing method**

(30) Priority: 18.07.2011 TW 100125244
(71) Applicant: Hon Hai Precision Industry Co., Ltd., New Taipei City (TW)
(72) Inventor: Yen, Tsung-Hsin, Tu-Cheng, New Taipei (TW); Lin, Chien-Chih, Tu-Cheng, New Taipei (TW); Lee, Chung-I, New Taipei City,Taiwan (TW); Yeh, Chien-Fa, New Taipei City,Taiwan (TW); Lu, Chiu-Hua, New Taipei City,Taiwan (TW)
(74) Representative: Gray, John James

(57) **Abstract**

A method for accessing attribute data of virtual machines using a control computer. The method generates a control command for accessing the virtual machines of a host computer (S10), determines a command type of the control command (S11), obtains attribute data of a first type of the virtual machines from a database of the control computer if the command type is a first type and the control command is a data query command (S22). The method transmits the control command to a virtual machine manager of the host computer if the command type is a second type (S31), and receives attribute data of a second type of the virtual machines returned from the virtual machine manager of the host computer (S32).

## Description

### Field

Embodiments of the present disclosure relate to cloud computing technology, and particularly to a control computer and method for accessing data of virtual machines installed in host computers.

### BackGround

In cloud computing technology, one container includes a plurality of host computers, and a plurality of virtual machines (VMs) are installed in each host computer for providing multiple services to users. A control computer is used to manage the virtual machines of the host computers by detecting attributes/statuses (i.e., memory usage rate) of the virtual machines at a specific time interval (i.e., ten minutes). However, the obtaining of the attributes/statuses data of the virtual machine may be delayed when a network connection between the control computer and the host computers is busy due to a network congestion. Therefore, an efficient method for managing virtual machines installed in host computers is desired.

### Summary

According to one aspect of the disclosure, a data access method is provided. The data access method includes generating a control command for accessing a plurality of virtual machines of a host computer. Determining a command type of the control command, where the command type comprises a first type and a second type. Obtaining attribute data of a first type of the virtual machines from a database of the control computer upon the condition that the command type is the first type and the control command is a data query command, or transmitting the control command to a virtual machine manager of the host computer upon the condition that the command type is the second type, and receiving attribute data of a second type of the virtual machines returned from the virtual machine manager of the host computer.

### BRIEF DESCRIPTION OF THE DRAWINGS

Embodiments of the invention are described, by way of example only, with reference to the accompanying drawings, in which:

FIG. 1 is a schematic diagram of one embodiment of a control computer electronically connecting with a plurality of host computers.

FIG. 2 is a schematic diagram of one embodiment of the control computer including a management system.

FIG. 3 is a schematic diagram of function modules of the management system included in the control computer.

FIG. 4 is a flowchart of one embodiment of a method for accessing data of virtual machines of the host computers using the control computer.

### DETAILED DESCRIPTION

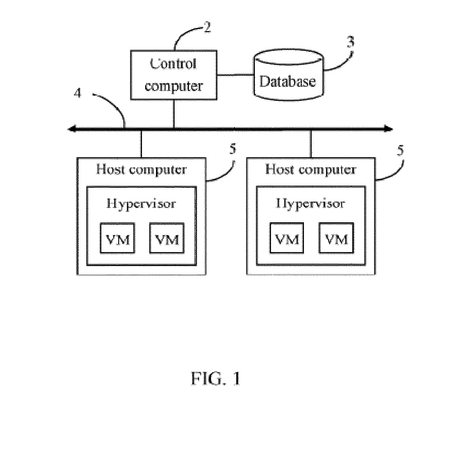

FIG. 1 is a schematic diagram of one embodiment of a control computer 2 electronically connecting with a plurality of host computers ("hosts") 5. The control computer 2 connects with the host computers 5 through a network 4, and further connects with a database 3 through a database connection. For example, the network 4 may be the Internet, an intranet, or any other relevant network, and the data connection may be a Java database connectivity (JDBC) or an open database connectivity (ODBC).

In one embodiment, the host computers 5 are located in a container of a specific space. Each host computer 5 has a plurality of virtual machines (VMs) installed for providing service to a user of the host computer 5. In one embodiment, the user can divide the host computers 5 into different groups, and create a folder to store attribute data (e.g., computer name and description) of the host computers 5 in each group. For example, the attribute data of the host computers of "Host1 ", "Host2", "Host3", "Host4", and "Host5" are stored in a first folder, and the attribute data of the host computers of "Host6", "Host7", "Host8", "Host9", and "Host10" are stored in a second folder.

The database 3 stores attribute data of the virtual machines which are persistent at normal time (hereinafter referred to as "persistent attribute data"). Thus, the control computer 2 can directly obtain the persistent attribute data from the database 3 when the control computer 2 detects statuses of the virtual machines. For example, the persistent attribute data may include a name and an identifier (ID) of the virtual machine. The persistent attribute data can be updated manually. The attribute data further includes data that are changeable at any moment (hereinafter referred to as "changeable attribute data"), such as a resource usage rate of the virtual machine. For example, the resource usage rate may include a central processing unit (CPU) usage rate, a network bandwidth usage rate, a hard disk usage rate, and a memory usage rate of the host computer 5 occupied by the virtual machines.

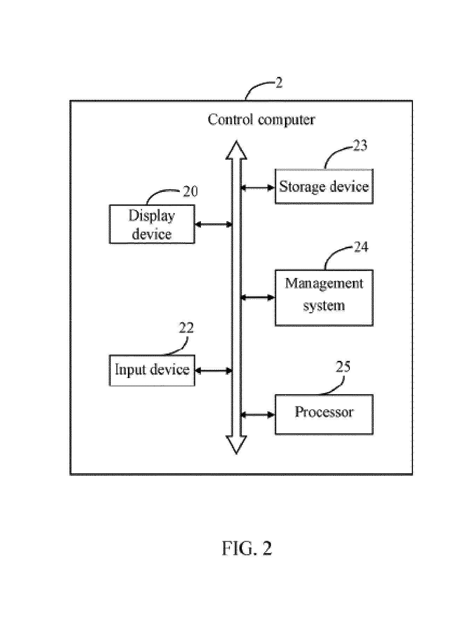

FIG. 2 is a schematic diagram of one embodiment of the control computer 2 including a management system 24 for managing virtual machines. The control computer 2 further includes a display device 20, an input device 22, a storage device 23, and at least one processor 25. The control computer 2 may be a computer, a server, or any other computing device. FIG. 2 illustrates only one example of the control computer 2 that may include more or fewer components than as illustrated, or a different configuration of the various components may exist in other embodiments.

The display device 20 may be a liquid crystal display (LCD) or a cathode ray tube (CRT) display, and the input device 22 may be a mouse, a keyboard, a touch screen, and/or a touchpad used for input.

The management system 24 is used to send a control command to the host computers 5, and obtain the attribute data of the virtual machines from the database 3 directly or from the host computers 5 through the network 4 according to the control command. In one embodiment, the management system 24 may include computerized instructions in the form of one or more programs that are executed by the at least one processor 25 and stored in the storage device 23 (or memory). A detailed description of the management system 24 will be given in the following paragraphs.

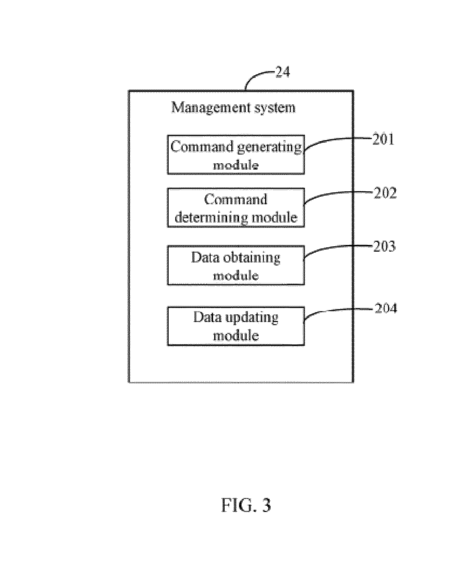

FIG. 3 is a schematic diagram of function modules of the management system 24 included in the control computer 2. In one embodiment, the management system 24 may include one or more modules, for example, a command generating module 201, a command determining module 202, a data obtaining module 203, and a data updating module 204. In general, the word "module", as used herein, refers to logic embodied in hardware or firmware, or to a collection of software instructions, written in a programming language, such as, Java, C, or assembly. One or more software instructions in the modules may be embedded in firmware, such as in an EPROM. The modules described herein may be implemented as either software and/or hardware modules and may be stored in any type of non-transitory computer-readable medium or other storage device. Some non-limiting examples of non-transitory computer-readable medium include CDs, DVDs, BLU-RAY, flash memory, and hard disk drives.

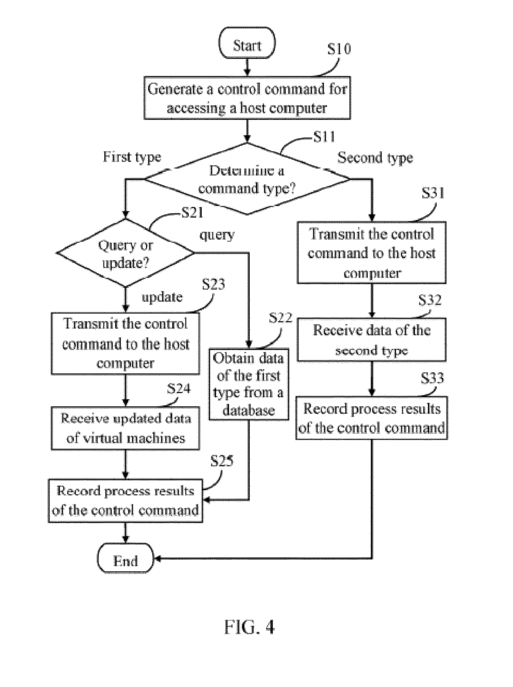

FIG. 4 is a flowchart of one embodiment of a method for accessing data of virtual machines of the host computers 5 using the control computer 2. Depending on the embodiment, additional steps may be added, others removed, and the ordering of the steps may be changed.

In step S10, the command generating module 201 generates a control command for accessing the virtual machines of one host computer 5. In one embodiment, the control command includes a first type for querying or updating the persistent attribute data of the virtual machines, and a second type for querying the changeable attribute data of the virtual machines. A plurality of host computers 5 may be accessed simultaneously in other embodiments.

In one embodiment, the first type of the control command is generated after a first specific time interval (i.e., ten minutes), the second type of the control command is generated after a second specific time interval (i.e., one minute).

In step S11, the command determining module 202 determines a command type of the control command. As mentioned above, the command type includes the first type and the second type. If the power management command is the first type, steps S21-S25 are executed. If the power management command is the second type, steps S31-S33 are executed.

In step S21, if the command type is the first type, the command determining module 202 determines whether the control command is a data query command or a data update command. If the control command is the data query command, step S22 is executed. If the control command is the data update command, steps S23-S25 are executed.

In step S22, if the command type is the first type and the control command is the data query command, the data obtaining module 203 directly obtains the attribute data of the first type of the virtual machines from the database 3 of the control computer 2, and the procedure goes to step S25. Because the attribute data of the first type (i.e., persistent data) can be directly obtain from the database 3, the acquirement of the attributes/statuses data of the virtual machine cannot be delayed even though a network connection between the control computer 2 and the host computers 5 is busy due to a network congestion, and a quantity of the control commands sent to the host computers 5 is reduced.

In step S23, if the command type is the first type and the control command is the data update command, the command generating module 201 transmits the control command to a virtual machine manager of the host computer 5 to execute the data update command. As shown in FIG. 1, "Hypervisor" represents the virtual machine manager of the host computer 5. The virtual machine manager of the host computer 5 updates the attribute data of one or more the virtual machines installed in the host computer 5 according to the data update command, and returns updated attribute data of the one or more virtual machines to the control computer 2.

In step S24, the data obtaining module 203 receives the updated attribute data of the one or more virtual machines returned from the virtual machine manager of the host computer 5. Then, the data updating module 204 updates corresponding attribute data of the virtual machines in the database 3 with the updated attribute data, such the name of the virtual machine.

In step S25, the data obtaining module 203 records a process result of the first type of the control command. In one embodiment, the process result includes a success message or a failure message of the first type of the control command. For example, if the data obtaining module 203 does not obtain the attribute data of the first type of the virtual machines from the database 3, the failure message is output on the display device 20 by display in a textbox for example.

In step S31, if the command type is the second type, the command generating module 201 transmits the control command to the virtual machine manager of the host computer 5 to execute the control command. The virtual machine manager of the host computer 5 obtains the attribute data of the second type (e.g., the CPU usage rate) of the virtual machines installed in the host computer 5 according to the control command, and returns the attribute data of the second type of the virtual machines to the control computer 2.

In step S32, the data obtaining module 203 receives the attribute data of the second type of the virtual machines returned from the virtual machine manager of the host computer 5, and displays the received attribute data on the display device 20.

In step S33, the data obtaining module 203 records a process result of the second type of the control command. In one embodiment, the process result includes a success message or a failure message of the first type of the control command. For example, if the data obtaining module 203 does not obtain the CPU usage rate of the virtual machines from the host computer 5, the failure message is output on the display device 20 by display in a textbox for example.

While specific embodiments of the invention have been described above, it is to be understood that the embodiments described herein can be implemented in hardware, software, firmware, middleware, microcode, or any combination thereof. For example, the invention may take the form of a computer program containing one or more sequences of machine-readable instructions which, when executed by a computer, causes the computer to perform one or more method described above.

When the embodiments are implemented in software, firmware, middleware or microcode, program code or code segments, they can be stored in a machine-readable medium, such as a storage component. The term "machine-readable medium" can include, without being limited to, wireless channels and various other media capable of storing, containing, and/or carrying instruction(s) and/or data. A code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, etc. can be passed, forwarded, or transmitted using any suitable means including memory sharing, message passing, token passing, network transmission, etc. For a software implementation, the techniques described herein can be implemented with modules (e.g., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. All of the processes described above may be embodied in, and fully automated via, functional code modules executed by one or more general purpose electronic devices or processors. The code modules may be stored in any type of non-transitory machine-readable medium or other storage device. Some or all of the methods may alternatively be embodied in specialized hardware. Depending on the embodiment, the non-transitory machine-readable medium may be a hard disk drive, a compact disc, a digital video disc, a tape drive or other suitable storage medium.

It should be emphasized that the above-described embodiments of the present disclosure, particularly, any embodiments, are merely possible examples of implementations, merely set forth for a clear understanding of the principles of the disclosure. Many variations and modifications may be made to the above-described embodiment(s) of the disclosure without departing substantially from the spirit and principles of the disclosure. All such modifications and variations are intended to be included herein within the scope of this disclosure and the present disclosure and protected by the following claims.

## Claims

1. A computer-implemented method for accessing attribute data of virtual machines using a control computer comprising a processor, the method comprising execution of the steps comprising:
generating a control command for accessing a plurality of virtual machines of a host computer;
determining a command type of the control command, the command type comprising a first type and a second type; and
obtaining attribute data of a first type of the virtual machines from a database of the control computer upon the condition that the command type is the first type and the control command is a data query command; or
transmitting the control command to a virtual machine manager of the host computer upon the condition that the command type is the second type, and
receiving attribute data of a second type of the virtual machines returned from the virtual machine manager of the host computer.

2. The method according to claim 1, wherein attribute data of the virtual machine comprises a name of the virtual machine, an identifier (ID) of the virtual machine, a resource usage rate of the virtual machine.

3. The method according to claim 1, wherein the first type of the control command is used to query or update the attribute data of the virtual machines which are persistent, and the second type of the control command is used to query the attribute data of the virtual machines which are changeable.

4. The method according to claim 1, wherein the attribute data of the first type of the virtual machines are persistent, and the attribute data of the second type of the virtual machines are changeable.

5. The method according to claim 1, further comprising:
transmitting the control command to the virtual machine manager of the host computer upon the condition that the command type is the first type, and the control command is a data update command;
receiving updated attribute data of one or more virtual machines returned from the virtual machine manager of the host computer; and
updating corresponding attribute data of the virtual machines in the database with the updated attribute data.

6. The method according to claim 1, further comprising:
recording process results of the first type or the second type of the control command.

7. A control computer, comprising:
a storage device;
at least one processor; and
one or more modules that are stored in the storage device and executed by the at least one processor, the one or more modules comprising:
a command generating module that generates a control command for accessing a plurality of virtual machines of a host computer;
a command determining module that determines a command type of the control command, the command type comprising a first type and a second type; and
a data obtaining module that obtains attribute data of a first type of the virtual machines from a database of the control computer upon the condition that the command type is the first type and the control command is a data query command; or
the command generating module further transmits the control command to a virtual machine manager of the host computer upon the condition that the command type is the second type; and
the data obtaining module further receives attribute data of a second type of the virtual machines returned from the virtual machine manager of the host computer.

8. The control computer according to claim 7, wherein attribute data of the virtual machine comprises a name of the virtual machine, an identifier (ID) of the virtual machine, a resource usage rate of the virtual machine.

9. The control computer according to claim 7, wherein the first type of the control command is used to query or update the attribute data of the virtual machines which are persistent, and the second type of the control command is used to query the attribute data of the virtual machines which are changeable.

10. The control computer according to claim 7, wherein the attribute data of the first type of the virtual machines are persistent, and the attribute data of the second type of the virtual machines are changeable.

11. The control computer according to claim 7, wherein the one or more modules comprise:
the command generating module that transmits the control command to the virtual machine manager of the host computer upon the condition that the command type is the first type, and the control command is a data update command;
the data obtaining module that receives updated attribute data of one or more virtual machines returned from the virtual machine manager of the host computer; and
a data updating module that updates corresponding attribute data of the virtual machines in the database with the updated attribute data.

12. The control computer according to claim 7, wherein the data obtaining module further records process results of the first type or the second type of the control command.

13. A storage medium having stored thereon instructions that, when executed by a processor of a control computer, causes the processor to perform a data access method as claimed in any of claims 1 to 6.

14. The storage medium according to claim 13, wherein the medium is selected from the group consisting of a hard disk drive, a compact disc, a digital video disc, and a tape drive.

15. A computer program product having machine readable instructions, which, when executed by a control computer, causes the control computer to perform a method as claimed in any of claims 1 to 6.
